Europäisches Patentamt

(19) European Patent Office

Office européen des brevets

(11) Publication number: **0 142 347 B1**

# (12) EUROPEAN PATENT SPECIFICATION

(45) Date of publication of patent specification: **26.02.92** (51) Int. Cl.5: **C01B 33/34**

(21) Application number: **84307758.7**

(22) Date of filing: **09.11.84**

(54) **Process for preparing type L zeolites by nucleating technique.**

(30) Priority: **10.11.83 US 550890**

(43) Date of publication of application:
**22.05.85 Bulletin 85/21**

(45) Publication of the grant of the patent:
**26.02.92 Bulletin 92/09**

(84) Designated Contracting States:
**AT BE CH DE FR GB IT LI LU NL SE**

(56) References cited:
**GB-A- 2 065 090
US-A- 3 433 589
US-A- 3 808 326
US-A- 3 947 482
US-A- 4 340 573**

(73) Proprietor: **EXXON RESEARCH AND ENGI-
NEERING COMPANY
P.O.Box 390, 180 Park Avenue
Florham Park, New Jersey 07932(US)**

(72) Inventor: **Vaughan, David E. W.
Box 596, RD 5
Flemington New Jersey 08822(US)**

(74) Representative: **Sexton, Jane Helen et al
J.A. Kemp & Co. 14 South Square Gray's Inn
London WC1R 5LX(GB)**

EP 0 142 347 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a process for preparing type L zeolites wherein a reaction mixture is seeded with an aged reaction mixture having the same zeolite composition so as to increase the rate of crystallization of the reaction mixture.

It is generally known to induce crystallization of a solution by adding to the solution what are commonly referred to as seeds or nucleation sources. One well established industrial practice described in U.S. Pat. 3,071,434 involves using a fully crystallized product to induce crystallization. This technique, however, has only limited usefulness in the synthesis of zeolites. For example, although this technique may be employed to synthesize zeolite NaA, it is not effective for synthesizing faujasites.

Another procedure designed to induce crystallization as disclosed in U.S. Patent 3,433,589 involves first cold aging a portion of a crystallization batch until nuclei form and then adding the remainder of the batch to obtain a final batch for crystallization. This technique is aimed primarily at faujasite synthesis.

In a third technique a nucleation slurry is prepared separately from the main crystallization batch and added thereto as an innoculant. The composition of the nucleation slurry is usually quite different from the composition of the crystallization batch, and often may be employed for the synthesis of more than one zeolite structure. See, e.g., U.S. Pats. 3,808,326 and 4,340,573.

Another procedure, disclosed in US patent 3,947,482, involves preparing a nucleation slurry containing an organic template and using such slurry to initiate crystallization of a similar slurry which excludes the template.

Still another procedure involves using as a seed a partially crystallized mass of a like zeolite, preferably a faujasite, as described in US patent No 3,321,272.

In accordance with this invention a type L zeolite is prepared by a process which comprises the steps of:

(a) preparing a first zeolite compositional mixture comprising water, a source of silica and alumina and an alkali metal hydroxide;

(b) homogenizing and aging the zeolite compositional mixture of step (a) at a temperature of between 70°C and 280°C and for a sufficient period of time so as to initiate and establish crystallization;

(c) adding at least a portion of aged the first aqueous mixture from step (b) to a second freshly prepared mixture having the same or substantially the same composition as the first mixture, an organic template, if present, being in both the first and the second mixtures; and

(d) maintaining the total reaction mixture from step (c) at a temperature of between 70°C and 280°C sufficient for complete or substantially complete crystallization of the zeolite.

Optionally an organic template is present in the reaction mixture of step (a) and also in said second freshly prepared mixture of step (c).

Thus the invention herein involves a ready experimental determination of the nucleation potential of a type L zeolite composition by sampling a crystallizing batch as a function of time and observing its effect as a nuclei source when added as seeds to a subsequent crystallizing batch. Each composition and type L zeolite will have a particular optimum initiation crystallization time.

Referring to the drawings:

Fig. 1 represents graphically a plot of percent by weight crystallization at 100°C of five batches of zeolite L (synthesized using potassium silicate) as a function of time. The batches represent non-seeded and seeded batches wherein the seeds were pre-aged at 100°C for from 1 to 4 days.

Fig. 2 represents graphically a plot of percent by weight crystallization at 100°C of five batches of zeolite L synthesized using colloidal silica as a function of time. The batches represent non-seeded and seeded batches wherein the seeds were pre-aged at 100°C for from 1 to 4 days.

The zeolites which may be prepared by the process of this invention are type L zeolites. These zeolites are defined herein as synthetic zeolites which crystallize in the hexagonal system with a characteristic x-ray diffraction pattern obtained from $CuK\alpha$ radiation with the major $d(\text{Å})$ peak values set out in the table of U.S. Pat. 3,216,789. Thus, they share a common zeolitic structure. Zeolite L itself has a general formula as follows:

0.9 to 1.3 $M_{n/2}0:Al_2O_3:5.2$ to 6.9 $SiO_2:xH_2O$

where M designates et least one exchangeable cation, n represents the valence of M and x is 0 to 9. A more complete description of zeolite L is provided in U.S. Pat. 3,216,789. Zeolite L has channel-shaped

EP 0 142 347 B1

pores of from 7 to 10 Å in diameter and may occur in the form of cylindrical crystals with a mean diameter of at least 0.1 micron and an aspect ratio of at least 0.5 as described, e.g., in E.P. Publication. No. 0096479 or in other shapes. Other zeolites outside the 5.2-6.9 $SiO_2:Al_2O_3$ ratio may be prepared. Thus, e.g., a type L zeolite which falls within the definition provided above which has a $SiO_2$ to $Al_2O_3$ ratio less than 5.2 is the zeolite designated as ECR-2 and described in EP Publication $N^o$ 0142350. That zeolite may be successfully prepared by the process herein.

In the process herein, a first aqueous mixture is prepared comprising water, a source of silica, a source of alumina, an alkali metal hydroxide, and optionally a source of an organic template cation and an acid or acid salt such as HCl or $Al_2(SO_4)_3$. Preparing such slurries is well known in the art, and the relative amounts of ingredients will determine which zeolite is produced. Examples of suitable silica sources, which are not intended to be exclusive, include silica gels, silicic acid, aqueous colloidal silica sols as described, e.g., in U.S. Pat. No. 2,574,902, potassium or sodium silicates, and the like. Zeolite L-type products are preferably prepared using potassium silicate in view of the high rate of crystallization obtained therewith and its relatively low cost.

The alumina is derived from any source, including, for example, a potassium aluminate solution prepared by heating a mixture of KOH with alumina, aluminum sulfate, kaolin, halloysite or metakaolin. Metakaolin may be obtained, for example, by heating kaolin or halloysite clay, having an oxide formula of $Al_2O_3:2SiO_2 \cdot$ x $H_2O$ (x = 1 or 2), at over $600^\circ$C for about two or more hours to remove the water of hydration therefrom and to render the structures amorphous and reactive. In preparing zeolites of the L type it is preferred to employ potassium aluminate and alum or metakaolin as the alumina source.

The alkali metal hydroxide employed may be selected from Li, Na, K, Rb and Cs hydroxides, depending mainly on the particular zeolite being synthesized. The hydroxide is preferably sodium or potassium hydroxide in preparing zeolites of the L type, more preferably potassium hydroxide with an optional smaller amount of sodium hydroxide.

The optional source of organic template cation which may be present in the aqueous mixture refers to a compound which in the synthesis of the zeolite provides a cation which acts as a template around which the zeolite structure forms. The particular template which may be employed will depend on the exact zeolite composition synthesized. Examples of suitable organic template sources for this purpose include tetraethylammonium, tetrapropylammonium, tetrabutylammonium, and bis(2hydroxyethyl)-dimethylammonium salts, such as hydroxides and halides. Preferably, in the synthesis of zeolite L either no template source is employed or the template source is a tetraalkylammonium salt wherein at least two of the alkyl groups contain more than one carbon atom, to ensure that pure zeolite L crystals are formed.

The order of mixture of ingredients is not essential and will depend largely on the exact zeolite to be prepared. The aqueous solution may be prepared in a container made of metal, glass, plastic or the like which should be closed to prevent water loss or equipped so as to maintain nearly constant water levels.

After the first aqueous mixture is formed it is homogenized by thorough blending so as to be substantially homogeneous in texture. This step is necessary to ensure that the zeolite product ultimately obtained is not a mixture of products and thus impure. The mixing may take place in any vessel in which complete mixing can be effected such as in a blender or a reaction vessel equipped with an agitator.

The homogenized first aqueous mixture is then placed in a reactor where it is hot-aged. The temperature of aging will ordinarily be the temperature at which crystallization of the zeolite takes place, and the lower the temperature the longer usually will be the necessary aging time. For purposes herein, the aging occurs between 70 and $280^\circ$C, more preferably 90 to $150^\circ$C. Suitable times of aging at each temperature range can be readily determined by adding a portion of the aged mixture at stated intervals of aging to the crystallization batch (second mixture) and testing for percent crystallization by x-ray diffraction analysis, as illustrated by the examples hereinbelow. The optimum aging time and temperature will yield pure crystals of the desired zeolite in the shortest period of time. It has been found, for example, that in preparing zeolite L, if the first aqueous solution is aged at $100^\circ$C, the optimum aging time is 2 to 3 days. In this period of time only partial crystallization of the first mixture has occurred. It has been found that the rate of crystallization of the second mixture increases upon addition of the first mixture thereto even when no visible crystallization of the first mixture has occurred. The crystallization rate improves as partial crystallization takes place in preparing zeolite L. If the first mixture becomes completely crystallized, however, the rate of crystallization of the second mixture is not significantly affected. Thus, there is a definite optimum degree of crystallization of the seeding mixture for purposes of maximizing the rate of crystallization of the main (second) reaction mixture. Generally, the degree of crystallization of the aged mixture will range from 5 to 80% crystallinity. For purposes herein an increase in the rate of crystallization signifies that the crystallization rate (defined as weight percent crystalization as a function of time) of the non-seeded second mixture is increased when at least a portion of the first mixture is added thereto.

3

After aging of the first mixture, at least a portion thereof (depending on how much is deemed optimum from prior experiments), preferably amounting to about 20 to 60% by weight of the second mixture, is added to the second aqueous mixture. By second aqueous mixture is meant a freshly prepared type L zeolite compositional mixture which has the same or substantially the same composition (with a variation of less than about 10%) is the first mixture and which has been homogenized.

In the final step of the process the total seeded reaction mixture from the previous step is maintained at an elevated temperature sufficient for complete or substantially complete crystallization, i.e., more than 50% and preferably more than 70% crystallization, to occur. The temperature at which the reaction mixture will crystallize will range from about 70 to 280° C, preferably 90 to 150° C, and more preferably at 100° C.

When the zeolite crystals have been obtained in sufficient amount, they are ordinarily recovered by filtration from the reaction mixture and are then washed, preferably with deionized or distilled water, to wash away excess mother liquor. The washing should continue, for best purity results, until the wash water, equilibrated with the product, has a pH of between about 9 and 12. After the washing step, the zeolite crystals may be dried or calcined.

An important element of the present seeding process is that it may be used in a "cascade" mode of continuous batch processing, in which a partially crystallized batch (N) is used to seed the sequential batch (N + 1) in a sequential crystallization process. This eliminates the need for making separate seed components and the attendant need for non-productive equipment used only for making seeds, as described, for example, in U.S. Pat. Nos. 3,639,099; 3,808,326 and 4,340,573.

The zeolite L types prepared by the process of this invention may be used as a sorbent or as a catalyst, e.g., in a hydrocarbon conversion process such as in cracking or reforming operations, isomerization, aromatization, or alkylation and in the hydrocracking of lube stocks and fuels. To be employed for these applications, the zeolite L prepared by the above method may be at least partially dehydrated by drying at temperatures of up to about 500° C or more until most or all of the water of hydration is removed.

It may also be desirable to exchange part or all of the cations in the zeolite structure with other cations or to use the acid form of the zeolite (containing hydrogen) as the cation. Suitable exchangeable cations for this purpose include any cation of metals selected from Group I to VIII of the Periodic Table. Preferably, such cations include mono-, di- and trivalent metal ions, particularly those of Groups I, II and III such as barium, sodium, potassium, calcium, cesium, lithium, magnesium, strontium, and zinc ions, and other cations such as rare earth, ammonium and alkylammonium cations. This replacement may be accomplished by conventional ion-exchange techniques as discussed, for example, in U.S. Patent No. 3,216,789.

Subsequent addition of metals may be accomplished by exchange or impregnation of salts or complexes, followed by appropriate reduction and calcining.

The Examples which follow illustrate further the embodiments of the invention. In all examples, parts and percentages are given by weight and temperatures in degrees Centigrade unless otherwise noted.

EXAMPLE 1

A potassium aluminate solution was prepared by dissolving 20.1 g KOH (as an 85% solution) in 25 g water, adding 16.2 g alumina ($Al_2O_3 \cdot 3H_2O$), heating the mixture until the alumina dissolved, and cooling the mixture to room temperature.

An alum solution was prepared by dissolving 25.2 g aluminum sulfate ($Al_2(SO_4)_3 \cdot 17H_2O$) in 35 g $H_2O$.

In sequence, with rapid mixing, the potassium aluminate solution was added to 293.7 g of potassium silicate followed by addition of the alum solution. The resulting slurry was adjusted to a total of 500 g by adding water thereto and was then transferred to a 500 ml tetrafluoroethylene bottle. The slurry had a composition, in terms of mole ratios of oxides, in the range:

| | |
|---|---|
| $K_2O:Al_2O_3$ | 3 |
| $SiO_2:Al_2O_3$ | 9 |
| $H_2O:Al_2O_3$ | 135 |

Analysis:

1. Non-Seeded Batch

This mixture was placed in an oven at 100° C and sampled at various intervals for x-ray diffraction analysis of the degree of crystallization.

4

2. Seeded Batches

   a) Seeding Batch

   A mixture prepared as described above was placed in an oven at 100°C and at daily intervals was used to seed subsequent reaction mixtures.

   b) Seeded Batches

### Batch I (One-Day Aging)

A batch was prepared as described above one day after the seeding batch was prepared and a total of 0.50 g of the seeding batch (now hot-aged for 1 day) was added thereto. The resulting slurry was heated at 100°C and was sampled at intervals of 10 to 20 hours. The extent of crystallization to zeolite L was measured by x-ray diffraction analysis.

### Batch II (Two-Day Aging)

A batch was prepared as described above two days after the seeding batch was prepared, and a total of 0.50 g of the seeding batch (now hot aged for 2 days) was added thereto. The resulting slurry was heated at 100°C and analyzed by x-ray diffraction as described for Batch I.

### Batch III (Three-Day Aging)

A batch was prepared as described above three days after the seeding batch was prepared, and a total of 0.50 g of the seeding batch (now hot aged for 3 days) was added thereto. The resulting slurry was heated at 100°C and analyzed by x-ray diffraction as described for Batch I.

### Batch IV (Four-Day Aging)

A batch was prepared as described above four days after the seeding batch was prepared and a total of 0.50 g of the seeding batch (now hot-aged for 4 days) was added thereto. The resulting slurry was heated at 100°C and analyzed by x-ray diffraction as described for Batch I.

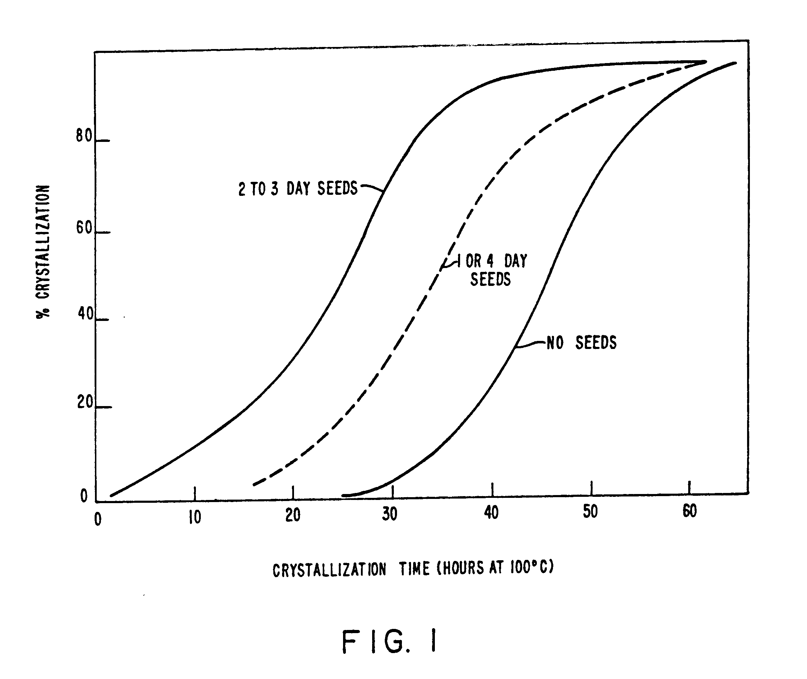

The results of the effect of hot aging on the rates of crystallization are summarized in Fig. 1, which illustrates the degree of crystallization obtained in Batches I to IV and in the non-seeded batch.

The results indicate that seeding a fresh batch with a portion of another batch that has already been hot aged for at least one day increases the rate of crystallization of the fresh batch, even when the hot-aged batch has no discernible crystallinity itself. The seeding effect, however, is optimized when the added seeds show some degree of crystallinity. After becoming fully or nearly fully crystallized the seeds lose their seeding or nucleating efficiency. An optimum seeding is achieved when the crystals have actively growing surfaces, as when they are hot aged at 100°C for from 1 to 4 days. When the seeding batch has been aged for the most optimum period of 2 to 3 days very rapid growth is effected and complete crystallization of the seeded batch is achieved in 30 to 40 hours.

### EXAMPLE 2

The procedure of Example 1 was employed to obtain the same zeolite L slurry composition using a commercially obtained aqueous suspension containing 40% by weight $SiO_2$ rather than potassium silicate and using the following amounts of ingredients:

| | |
|---|---|
| 57.6 g | KOH (85% solution) |
| 23.3 g | $Al_2O_3 \cdot 3H_2O$ |
| 201.3 g | aqueous suspension of $SiO_2$ |
| 218 g | $H_2O$ |

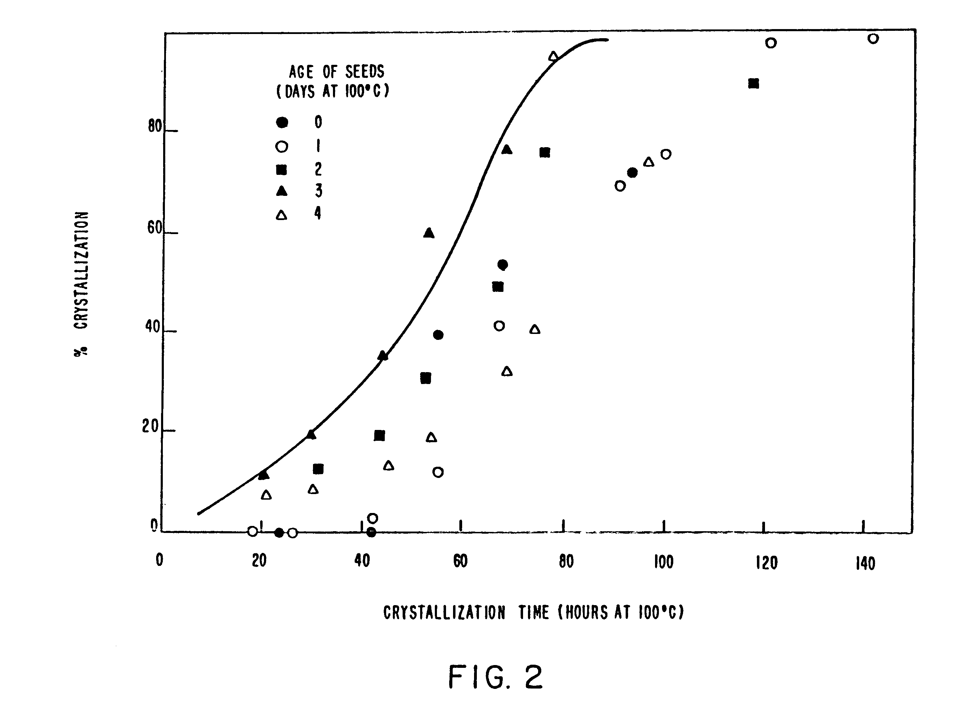

The procedure of Example 1 was followed to prepare and test a non-seeded batch and four seeded batches V-VIII seeded with 1, 2, 3 or 4 day old hot-aged seeds, respectively. The crystallization rates obtained are illustrated in Fig. 2. The seeds aged for 3 days again gave optimum crystallization rates for zeolite L.

In summary, this invention is seen to provide a process for preparing type L zeolites, wherein one seeding composition is hot aged for an optimal period of time and then added to an identical zeolite synthesis composition so as to induce zeolite crystallization at elevated temperatures.

## Claims

1. A process for preparing type L zeolite which comprises the steps of:

    (a) preparing a first zeolite compositional mixture comprising water, a source of silica and alumina and an alkali metal hydroxide;

    (b) homogenizing and aging the zeolite compositional mixture of step (a) at a temperature of between 70°C and 280°C and for a sufficient period of time so as to initiate and establish at least partial crystallization;

    (c) adding at least a portion of the aged first aqueous mixture from step (b) to a second freshly prepared mixture having the same or substantially the same composition as the first mixture, an organic template, if present, being in both the first and the second mixtures; and

    (d) maintaining the total reaction mixture from step (c) at a temperature of between 70°C and 280°C sufficient for complete or substantially complete crystallization of the zeolite.

2. A process according to claim 1 wherein the zeolite is a zeolite L having a $SiO_2:Al_2O_3$ ratio of between 5.2 and 6.9.

3. A process according to either of claims 1 and 2 wherein an organic template is present in the reaction mixture of step (a) and also in said second freshly prepared mixture of step (c).

4. A process according to any one of the preceding claims wherein the source of silica is potassium silicate, the source of alumina is potassium aluminate, and the alkali metal hydroxide is potassium hydroxide.

5. A process according to any one of the preceding claims wherein the first aqueous mixture is aged in step (b) at 90 to 150°C for 1 to 4 days.

6. A process according to claim 5 wherein the first aqueous mixture is aged in step (b) at about 100°C for 2 to 3 days.

7. A process according to any one of the preceding claims wherein the total reaction mixture in step (d) is maintained at between 90 and 150°C.

8. A process according to any one of the preceding claims wherein in a cascade continuous batch crystallization process a portion of the partially crystallized first aqueous type L zeolite compositional mixture from step (b) is added to a sequential batch of the same mixture.

## Revendications

1. Procédé de préparation de zéolite du type L, qui comprend les étapes consistant :

    (a) à préparer un premier mélange de composition de la zéolite comprenant de l'eau, une source de silice et d'alumine et un hydroxyde de métal alcalin ;

    (b) à homogénéiser et à faire vieillir le mélange de composition de la zéolite de l'étape (a) à une température comprise entre 70°C et 280°C et pendant une période suffisante pour déclencher et établir une cristallisation au moins partielle ;

    (c) à ajouter au moins une portion du premier mélange aqueux vieilli venant de l'étape (b) à un second mélange fraîchement préparé ayant la même ou pratiquement la même composition que le premier mélange, une substance organique d'orientation moléculaire éventuellement présente se trouvant à la fois dans les premier et second mélanges ; et

    (d) à maintenir le mélange réactionnel total venant de l'étape (c) à une température, comprise entre 70°C et 280°C, suffisante pour la cristallisation totale ou quasi totale de la zéolite.

2. Procédé suivant la revendication 1, dans lequel la zéolite est une zéolite L ayant un rapport $SiO_2:Al_2O_3$ compris entre 5,2 et 6,9.

3. Procédé suivant l'une des revendications 1 et 2, dans lequel un composé organique d'orientation moléculaire est présent dans le mélange réactionnel de l'étape (a) ainsi que dans le second mélange fraîchement préparé de l'étape (c).

4. Procédé suivant l'une quelconque des revendications précédentes, dans lequel la source de silice est le silicate de potassium, la source d'alumine est l'aluminate de potassium et l'hydroxyde de métal alcalin est l'hydroxyde de potassium.

5. Procédé suivant l'une quelconque des revendications précédentes, dans lequel le premier mélange aqueux est vieilli dans l'étape (b) à une température de 90 à 150°C pendant 1 à 4 jours.

6. Procédé suivant la revendication 5, dans lequel le premier mélange aqueux est vieilli dans l'étape (b) à environ 100°C pendant 2 à 3 jours.

7. Procédé suivant l'une quelconque des revendications précédentes, dans lequel le mélange réactionnel total dans l'étape (d) est maintenu entre 90 et 150°C.

8. Procédé suivant l'une quelconque des revendications précédentes, dans lequel une portion du premier mélange aqueux de composition de zéolite du type L partiellement cristallisé venant de l'étape (b) est ajoutée dans une opération continue en cascade de cristallisation par lots à un lot consécutif du même mélange.

**Patentansprüche**

1. Verfahren zur Herstellung von Zeolith des Typs L, bei dem:
   (a) eine erste Zeolithzusammensetzungsmischung hergestellt wird, die Wasser, eine Siliciumdioxid- und eine Aluminiumoxidquelle sowie ein Alkalimetallhydroxid umfaßt,
   (b) die Zeolithzusammensetzungsmischung aus (a) homogenisiert und bei einer Temperatur zwischen 70°C und 280°C über einen ausreichend langen Zeitraum gealtert wird, um so zumindest teilweise Kristallisation zu iniziieren und zu begründen,
   (c) mindestens ein Teil der gealterten ersten wäßrigen Mischung aus (b) zu einer zweiten frisch hergestellten Mischung mit der gleichen oder im wesentlichen gleichen Zusammensetzung wie die erste Mischung gegeben wird, wobei eine organische Schablone, falls vorhanden, sowohl in der ersten als auch der zweiten Mischung vorhanden ist, und
   (d) die gesamte Reaktionsmischung aus (c) ausreichend lange bei einer Temperatur zwischen 70°C und 280°C gehalten wird, um vollständige oder im wesentliche vollständige Kristallisation des Zeoliths zu bewirken.

2. Verfahren nach Anspruch 1, bei dem der Zeolith eine Zeolith L mit einem $SiO_2$:$Al_2O_3$-Verhältnis zwischen 5,2 und 6,9 ist.

3. Verfahren nach einem der Ansprüche 1 oder 2, bei dem in der Reaktionsmischung aus (a) und ebenso in der zweiten frisch hergestellten Mischung aus (c) eine organische Schablone vorhanden ist.

4. Verfahren nach einem der vorhergehenden Ansprüche, bei dem die Siliciumdioxidquelle Kaliumsilikat ist, die Aluminiumoxidquelle Kaliumaluminat ist und das Alkalimetallhydroxid Kaliumhydroxid ist.

5. Verfahren nach einem der vorhergehenden Ansprüche, bei dem die erste wäßrige Mischung in (b) 1 bis 4 Tage lang bei 90 bis 150°C gealtert wird.

6. Verfahren nach Anspruch 5, bei dem die erste wäßrige Mischung in (b) 2 bis 3 Tage lang bei etwa 100°C gealtert wird.

7. Verfahren nach einem der vorhergehenden Ansprüche, bei dem die gesamte Reaktionsmischung in (d) zwischen 90 und 150°C gehalten wird.

8. Verfahren nach einem der vorhergehenden Ansprüche, bei dem in einem kaskadenartigen kontinuierlichen Ansatzkristallisationsverfahren ein Teil der teilweise kristallisierten ersten wäßrigen Zeolith L-Zusammensetzungsmischung aus (b) zu einem nachfolgenden Ansatz mit der gleichen Mischung gegeben wird.

FIG. I

FIG. 2

EP 0 142 347 B1